# EUROPÄISCHE PATENTANMELDUNG

(11) **EP 3 309 580 A2**
(43) Veröffentlichungstag der Anmeldung: **18.04.2018**
(21) Anmeldenummer: 17182169.7
(22) Anmeldetag: 19.07.2017
(51) Int. Cl.: G01S 7/539, G01S 15/93, G01S 15/10, G01S 7/41

(54) **VERFAHREN UND RECHENEINHEIT ZUR ERKENNUNG EINER NASSEN ODER FEUCHTEN FAHRBAHN UND ZUR OBJEKTDETEKTION**

(30) Priorität: 22.09.2016 DE 102016218238
(71) Anmelder: Robert Bosch GmbH, 70442 Stuttgart (DE)
(72) Erfinder: BANKO, ZOLTAN, 2192 Hevizgyork (HU); Orosz, Tamas, 3711 Szirmabeseny (HU); BRAUN, ZOLTAN, 1094 Budapest (HU)

(57) **Zusammenfassung**

Bei dem Verfahren zur Erkennung einer nassen oder feuchten Fahrbahn und zur Detektion von Objekten werden zunächst erste Abstandssignale empfangen. Darauf folgend wird wenigstens ein Objekt detektiert, falls die empfangenen ersten Abstandsignale einem Abstand größer gleich einem bestimmten Abstandsschwellwert entsprechen. Falls die empfangenen ersten Abstandssignale einem vordefinierten Abstand kleiner dem bestimmten Abstandsschwellwert entsprechen, werden die empfangenen ersten Abstandsignale mit hinterlegten zweiten Abstandsignalen verglichen. In Abhängigkeit einer durch diesen Vergleich der empfangenen und hinterlegten Abstandssignale festgestellten Abweichung wird eine nasse oder feuchte Fahrbahn erkannt.

## Beschreibung

### Stand der Technik

Die Erfindung betrifft ein Verfahren, eine Recheneinheit und System zur Erkennung einer nassen oder feuchten Fahrbahn und zur Detektion von Objekten.

Die Schrift DE 10 2006 037 591 A1 offenbart eine Vorrichtung mit wenigstens zwei Ultraschall-Sensoren zur Erfassung eines sich bewegenden Objekts und zur Bestimmung von möglichen Fehlereinflüssen durch aktuelle Umfeldbedingungen. Hierbei kann ein Ultraschallsensor der Vorrichtung dazu dienen, den Abstand zu dem Objekt zu ermitteln. Ein weiterer Ultraschallsensor der Vorrichtung kann dazu ausgebildet sein, die Umfeldbedingungen zu messen und mögliche Fehlereinflüsse zu bestimmen. Der Begriff Umfeldbedingungen kann beispielsweise auch die aktuelle Feuchtigkeit oder Regen umfassen.

Bekannt ist jedoch aus dem Stand der Technik nicht, mittels nur eines Sensors sowohl ein Objekt detektieren zu können, wie auch eine nasse oder feuchte Fahrbahn zu detektieren.

### Offenbarung der Erfindung

Um diesem Problem zu begegnen, werden erfindungsgemäß ein Verfahren, eine Recheneinheit, die das Verfahren ausführt und ein die Recheneinheit aufweisendes System zur Erkennung einer nassen oder feuchten Fahrbahn und zur Detektion von Objekten vorgeschlagen.

Bei dem Verfahren zur Erkennung einer nassen oder feuchten Fahrbahn und zur Detektion von Objekten werden zunächst erste Abstandssignale empfangen. Darauf folgend wird wenigstens ein Objekt detektiert, falls die empfangenen ersten Abstandsignale einem Abstand größer gleich einem bestimmten Abstandsschwellwert entsprechen. Falls die empfangenen ersten Abstandssignale einem vordefinierten Abstand kleiner dem bestimmten Abstandsschwellwert entsprechen, werden die empfangenen ersten Abstandsignale mit hinterlegten zweiten Abstandsignalen verglichen. In Abhängigkeit einer durch diesen Vergleich der empfangenen und hinterlegten Abstandssignale festgestellten Abweichung wird eine nasse oder feuchte Fahrbahn erkannt. Das hinterlegte zweite Abstandssignal kann hierbei ein Signal repräsentieren, welches beispielsweise ebenfalls den Verlauf eines Abstandssignals besitzt oder einen dauerhaften oder wechselnden, konstanten Wert, also eine Art Schwellenwert darstellt.

Durch die im Verfahren dargestellte Differenzierung von Abstandssignalen können die Abstandssignale somit einerseits zur Erkennung einer nassen oder feuchten Fahrbahn, wie auch zur Detektion von Objekten verwendet werden. Falls die ersten empfangenen Abstandssignale aus einem vordefinierten Abstand empfangen werden, so kann auf ein Bodenecho geschlussfolgert werden. Der vordefinierte Abstand ist also ein bestimmter, definierter Abstand, welcher sich unterhalb des Abstandsschwellwert befindet. Es kann sich somit beispielsweise um einen Abstand von 40 cm handeln, wobei der Abstandsschwellwert beispielsweise 50 cm beträgt. Im Falle, dass die ersten empfangenen Abstandssignale aus einem Abstand größer einem Abstandsschwellenwert empfangen werden, werden diese zur Objektdetektion verwendet.

Vorzugsweise werden Abstandssignalamplituden und/oder Abstandssignalbreiten der empfangenen ersten Abstandssignale mit Abstandssignalamplituden und/oder Abstandssignalbreiten der zweiten empfangenen Abstandssignale verglichen, falls die empfangenen ersten Abstandssignale dem vordefinierten Abstand kleiner dem bestimmten Abstandsschwellenwert entsprechen. Da die Abstandssignalbreiten und die Abstandssignalamplituden ein Kennzeichen für die Energie eines reflektierten Signals sind und die Energie von Abstandssignalen beispielsweise eine Korrelation zu der Feuchtigkeit eines reflektierenden Objekts besitzen, können diese zum Erkennen einer nassen oder feuchten Fahrbahn verwendet werden. Bevorzugt wird eine feuchte Fahrbahn in Abhängigkeit einer Überschreitung eines ersten Schwellenwertes durch die festgestellte Abweichung erkannt. Alternativ wird eine nasse Fahrbahn in Abhängigkeit einer Überschreitung eines zweiten Schwellenwerts durch die festgestellte Abweichung erkannt. Hierbei ist der zweite Schwellenwert größer als der erste Schwellenwert. Somit wird berücksichtigt, dass empfangene erste Abstandssignale als Bodenecho an einer feuchten Fahrbahn oft geringere Abweichungen zu hinterlegten Abstandsignalen besitzen, als Bodenechos an einer nassen Fahrbahn.

Bevorzugt beträgt der bestimmte Abstandsschwellwert 50 cm. Dies ist ein Wert, oberhalb dessen die meisten Abstandssignale noch zur Objektdetektion sicher verwendet werden können, unterhalb dessen jedoch die sichere Objektdetektion nicht unbedingt mehr gegeben ist und man davon ausgehen kann, dass es sich um Bodenechos handelt

Vorzugsweise dient das Verfahren zur Erkennung einer nassen oder feuchten Fahrbahn für ein Fahrzeug. Das Fahrzeug bietet einen Anwendungsfall, welcher beispielsweise sicherheitstechnisch höchst relevant ist. So kann eine nasse Fahrbahn beispielsweise zu einem längeren Bremsweg führen.

Eine Änderung des Nässezustands der Fahrbahn kann vorzugweise in Abhängigkeit einer Zunahme der bei dem Vergleich der empfangenen und hinterlegten Abstandssignale festgestellten Abweichung über der Zeit erkannt werden. Alternativ oder zusätzlich kann die Änderung des Nässezustands vorzugsweise in Abhängigkeit einer Abnahme der bei dem Vergleich der empfangenen und hinterlegten Abstandssignale festgestellten Abweichung über der Zeit erkannt werden. So kann sich der Nässezustand der Fahrbahn beispielsweise durch Regen oder steigende Luftfeuchtigkeit ändern. Der Nässezustand der Fahrbahn kann sich aber beispielsweise auch durch Trocknen der Fahrbahn ändern. Die Erkennung einer Änderung des Nässezustands der Fahrbahn hätte damit beispielsweise den Vorteil, dass damit entsprechend Rückschlüsse gezogen werden könnten, ob es momentan regnet. Eine mit der Zeit feuchter oder nasser werdende Straße kann auf Regen zurückzuführen sein. Eine hohe relative Luftfeuchtigkeit und/oder Regen können wiederum Einflüsse auf die Sensibilität einer Erfassungseinheit haben, was somit berücksichtigt werden könnte. Genauso könnte andersherum das Trocknen der Fahrbahn darauf hindeuten, dass es schon länger nicht mehr geregnet hat und/oder die Luftfeuchtigkeit sinkt. Es wäre entsprechend auch vorstellbar, das Erkennen des Nässezustands der Fahrbahn dazu zu verwenden, um zusätzliche Funktionen, wie die Nebelschlussleuchte eines Fahrzeugs bei beispielsweise Nebel (und damit hoher relativer Luftfeuchtigkeit) zu steuern.

Die empfangenen ersten Abstandssignale repräsentieren vorzugsweise einen Abstand des wenigstens einen detektierten Objekts oder der Fahrbahn zu einer Erfassungseinheit. So ist eine bessere Vergleichbarkeit der empfangenen Abstandssignale mit anderen hinterlegten Abstandssignalen garantiert, da sichergestellt ist, dass Abstände immer zur selben (Abstands-) Erfassungseinheit erfasst werden.

Bevorzugt entsprechen die hinterlegten zweiten Abstandssignale einer trockenen Fahrbahn. Somit kann besonders einfach festgestellt werden, ob eine nasse oder feuchte Fahrbahn vorliegt. Insbesondere können die hinterlegten zweiten Abstandssignale einer trockenen Fahrbahn in dem vordefinierten Abstand entsprechen. Daraus ergibt sich eine noch größere Vergleichbarkeit der empfangenen mit den hinterlegten Abstandssignalen, wodurch eine nasse oder feuchte Fahrbahn noch sicherer erkannt werden kann.

Die empfangenen ersten Abstandssignale repräsentieren bevorzugt Ultraschallsignale. Ultraschallsignale besitzen eine Korrelation zwischen relativer Feuchtigkeit und erzeugter Dämpfung des Ultraschallsignals. Somit besitzen empfangene Ultraschallsignale Eigenschaften, welche zum Erkennen einer nassen oder feuchten Fahrbahn dienen können. Vorzugsweise wird ein Messzyklus der Erfassungseinheit mit tatsächlichen Ultraschallsignalen in Abhängigkeit der Anzahl empfangener Ultraschallsignale in dem Messzyklus ermittelt. Die empfangenen Ultraschallsignale entsprechen hierbei demselben Objektabstand oder Fahrbahnabstand. Unter tatsächlichen Ultraschallsignale versteht man hierbei Signale, welche auf Objektdetektion oder ein Bodenecho zurückzuführen sind und beispielsweise Störsignale darstellen. Alternativ oder zusätzlich wird ein Messzyklus der Erfassungseinheit mit tatsächlichen Ultraschallsignalen in Abhängigkeit von der Anzahl von nacheinander folgenden Messzyklen der ersten Erfassungseinheit, bei denen Ultraschallsignale empfangen werden, die demselben Objektabstand oder Fahrbahnabstand entsprechen, ermittelt.

Alternativ oder zusätzlich wird ein Messzyklus der Erfassungseinheit mit tatsächlichen Ultraschallsignalen in Abhängigkeit von den Abstandssignalbreiten der empfangenen Ultraschallsignale ermittelt. In Abhängigkeit eines ermittelten Messzyklus der Erfassungseinheit mit tatsächlichen Ultraschallsignalen werden die empfangenen Ultraschallsignale zur Detektion von Objekten und zum Erkennen einer nassen oder feuchten Fahrbahn verwendet. Somit kann sichergestellt werden, dass es sich bei den empfangenen Ultraschallsignalen auch wirklich um Bodenechos der Fahrbahn oder um Echos der detektierten Objekte handelt und nicht um beispielsweise Störsignale. Vorzugsweise wird ein Messzyklus der Erfassungseinheit mit tatsächlichen Ultraschallsignalen in Abhängigkeit von höchstens 6 empfangenen Ultraschallsignalen in einem Messzyklus der ersten Erfassungseinheit ermittelt. Dies ist das Maximum von Ultraschallsignalen, welches Ultraschallsensoren der aktuellen Generation innerhalb eines Messzyklus erfassen können.

Vorzugsweise wird in einem weiteren Verfahrensschritt zu Beginn des Verfahrens zunächst eine Abstrahlrichtung der ersten Erfassungseinheit zum Empfangen von ersten Abstandssignale aus einem vordefinierten Abstand kleiner dem bestimmten Abstandsschwellwert und zum Empfangen von Abstandssignalen größer gleich dem bestimmten Abstandsschwellwert eingestellt. Somit wird es möglich gemacht, sowohl die Bodenechos, wie auch die Objektechos zu empfangen. Das Einstellen der Abstrahlrichtung der ersten Erfassungseinheit erfolgt vorzugsweise durch Einstellen der Schallfrequenz der ersten Erfassungseinheit. Alternativ erfolgt das Einstellen der Abstrahlrichtung durch Einstellen des Schalltrichters der ersten Erfassungseinheit. Durch gezieltes Einstellen der Schallfrequenz oder des Schalltrichters der Erfassungseinheit lässt sich die Schallkeule und damit das Erfassungsfenster der Erfassungseinheit gezielt einstellen. Somit kann die Schallkeule so eingestellt werden, dass sie Bodenechos der Fahrbahn immer aus derselben Entfernung empfängt und gleichzeitig Echos von weiter entfernten Objekten empfangen werden können.

Bevorzugt werden zusätzlich die Fahrbahn charakterisierende Eigenschaften empfangen. Dies sind z.B. Fahrbahnunebenheiten. Anschließend erfolgt der Vergleich der empfangenen ersten Abstandssignale mit hinterlegten zweiten Abstandssignalen, falls die empfangenen ersten Abstandssignale einem vordefinierten Abstand kleiner dem bestimmten Abstandsschwellwert einer Fahrbahn zu der ersten Erfassungseinheit entsprechen. Die zweiten hinterlegten Abstandssignale, die mit den ersten Abstandssignalen verglichen werden, entsprechen hierbei Abstandssignalen, welche von einer Fahrbahn mit den charakteristischen Eigenschaften, insbesondere einer trockenen Fahrbahn aus dem vordefinierten Abstand mit den charakteristischen Eigenschaften empfangen wurden. Der zusätzliche Empfang von charakteristischen Fahrbahneigenschaften und die Berücksichtigung dieser charakteristischen Eigenschaften bei dem anschließenden Vergleich der ersten Abstandssignale mit den hinterlegten Abstandssignalen bietet den Vorteil, dass Bodenechos, welche auf diese charakteristischen Fahrbahneigenschaften und nicht auf eine feuchte oder nasse Fahrbahn zurückzuführen sind, ermittelt werden können. Fahrbahnunebenheiten können beispielsweise dazu führen, dass die ersten Abstandssignale aus einem kürzeren oder längeren Abstand als dem vordefinierten Abstand empfangen werden und somit zu einer Ungenauigkeit bei der Erkennung einer nassen oder feuchten Fahrbahn führen.

Die Erfindung umfasst zudem ein System zur Erkennung einer nassen Fahrbahn, welches aus einer Recheneinheit, einer Speichereinheit, einer ersten Erfassungseinheit und einer Ausgabeeinheit besteht. Die erste Erfassungseinheit, welche insbesondere einen Ultraschallsensor zur Totwinkelerkennung oder zur Einparkhilfe repräsentiert, ist zur Erfassung von ersten Abstandswerten ausgebildet. Die Speichereinheit ist dazu ausgebildet, die zweiten Abstandssignale zu hinterlegen. Die Ausgabeeinheit ist dazu ausgebildet, eine Information über eine erkannte nasse oder feuchte Fahrbahn und einer Information über detektierte Objekte auszugeben. Die Recheneinheit führt das zuvor beschriebene Verfahren zur Erkennung einer nassen oder feuchten Fahrbahn und zur Detektion von Objekten aus. Vorzugsweise besitzt das System zusätzlich eine zweite Erfassungseinheit zur Erfassung von die Fahrbahn charakterisierenden Eigenschaften.

### Kurze Beschreibung der Zeichnungen

Figur 1 zeigt eine Ausführungsform des erfindungsgemäßen Systems zur Erkennung einer nassen oder feuchten Fahrbahn und zur Detektion von Objekten.
Figur 2a zeigt einen Verfahrensverlauf gemäß verschiedener Ausführungsformen der Erfindung zur Erkennung einer nassen oder feuchten Fahrbahn und zur Detektion von Objekten.
Figur 2b zeigt einen Verfahrensverlauf gemäß verschiedener weiterer Ausführungsformen der Erfindung zur Erkennung einer nassen oder feuchten Fahrbahn und zur Detektion von Objekten.
Figur 3 zeigt schematisch einen Signalverlauf der empfangenen Abstandssignale bei trockener und bei nasser Fahrbahn.

### Ausführungsbeispiele

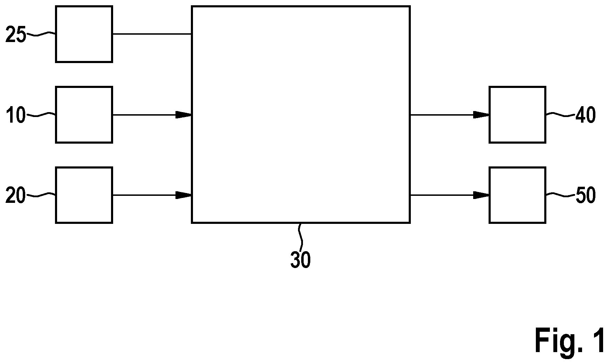

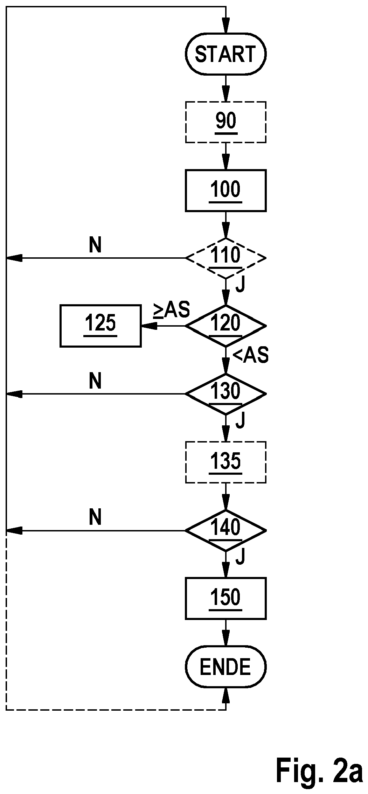

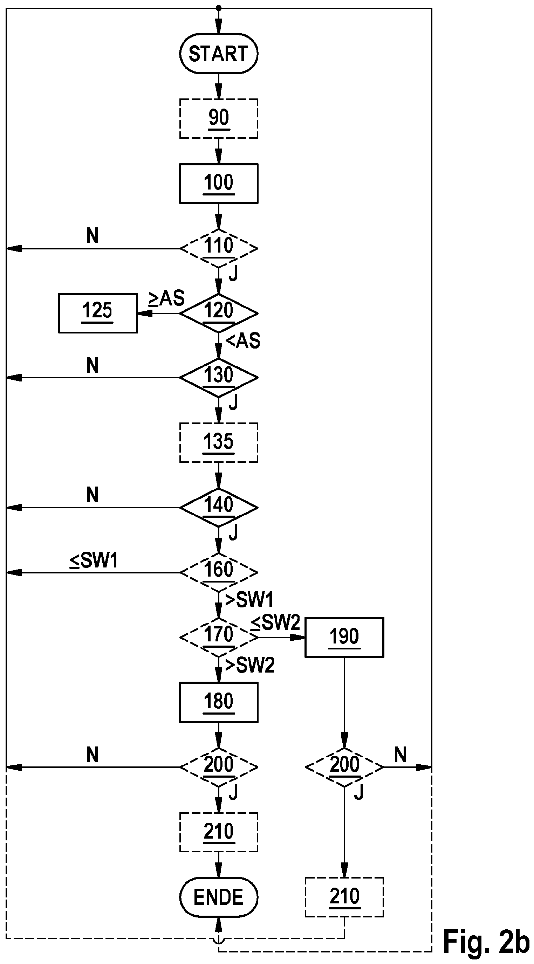

Figur 1 zeigt schematisch eine beispielhafte schematische Darstellung des erfindungsgemäßen Systems zur Erkennung einer nassen oder feuchten Fahrbahn und zur Detektion von Objekten. Das System umfasst hierbei eine Recheneinheit 30, eine erste Erfassungseinheit 20, eine Speichereinheit 25, sowie eine Ausgabeeinheit 40. Die erste Erfassungseinheit 20 ist dazu ausgebildet erste Abstandswerte zu erfassen. Die erste Erfassungseinheit 20 kann beispielsweise einen Ultraschallsensor zur Totwinkelerkennung oder zur Einparkhilfe repräsentieren. Solche Ultraschallsensoren bieten in der Anwendung des erfindungsgemäßen Verfahrens den Vorteil, dass sie im schon im Nahbereich von beispielsweise 50-500 cm Anwendung finden und deshalb nur eine kleine Einstellungsanpassung benötigen, um auch in dem Bereich unterhalb 50 cm Echos erhalten zu können. Die Speichereinheit 25 ist dazu ausgebildet die zweiten Abstandssignale zu hinterlegen. Auf dieser Figur 1 ist die Speichereinheit 25 als beispielsweise Server ausgebildet, auf dem die zweiten Abstandssignale gespeichert sind und von dem die Recheneinheit die zweiten hinterlegten Abstandssignale empfängt. Alternativ kann die Speichereinheit 25 aber auch beispielsweise intern in die Recheneinheit 30 integriert sein. Die Ausgabeeinheit 40 ist dazu ausgebildet, eine Information über eine erkannte nasse oder feuchte Fahrbahn und einer Information über detektierte Objekte auszugeben. Hierbei kann die Information beispielsweise dem Fahrer digital angezeigt werden. Die erfindungsgemäße Recheneinheit 30 führt das in den folgenden Figuren 2a und 2b dargestellte Verfahren zur Erkennung einer nassen oder feuchten Fahrbahn und zur Detektion von Objekten aus. Optional besitzt das System zusätzlich eine zweite Erfassungseinheit 10, die dazu ausgebildet ist, die Fahrbahn charakterisierende Eigenschaften zu erfassen. Hierbei kann es sich beispielsweise um Sensoren eines ABS-Systems handeln, welche Informationen über Fahrbahnunebenheiten erfassen können. Zusätzlich besitzt das System auf dieser Figur 1 einen Motor 50 für die Wischblätter eines Fahrzeugs, wobei dieser von der Recheneinheit bei Erkennung einer stetig nasser werdenden Fahrbahn (Indiz für Regen) angesteuert wird. Der Motor für die Wischblätter soll hier nur ein Beispiel für viele Funktionen darstellen, welche durch Erkennen des Nässezustands der Fahrbahn gesteuert werden können.

In dem ersten Ausführungsbeispiel gemäß Figur 2a wird das Verfahren gestartet und in einem sich daran anschließenden ersten Verfahrensschritt 100 werden die ersten Abstandssignale empfangen. In einem auf den Verfahrensschritt 100 folgenden Verfahrensschritt 120 wird der, den empfangenen Abstandssignalen entsprechenden Abstand mit einem bestimmten Abstandsschwellwert AS verglichen. Falls die empfangenen ersten Abstandssignale einem Abstand größer gleich einem bestimmten Abstandsschwellwert AS entsprechen, wird im Verfahrensschritt 125 wenigstens ein Objekt detektiert. Falls die empfangenen ersten Abstandssignale einem vordefinierten Abstand kleiner dem bestimmten Abstandsschwellwert AS entsprechen, wird in einem auf den Verfahrensschritt 120 folgenden Verfahrensschritt 130 geprüft, ob die empfangenen ersten Abstandssignale einem vordefinierten Abstand entsprechen. Falls die empfangenen ersten Abstandssignale dem vordefinierten Abstand kleiner dem bestimmten Abstandsschwellenwert entsprechen, werden die empfangenen ersten Abstandssignale in einem auf den Verfahrensschritt 130 folgenden Verfahrensschritt 140 mit hinterlegten zweiten Abstandssignalen verglichen. Falls die empfangenen ersten Abstandssignale nicht dem vordefinierten Abstand kleiner dem bestimmten Abstandsschwellenwert entsprechen, wird das Verfahren von neuem gestartet oder alternativ beendet. Falls in dem Verfahrensschritt 140 eine durch den Vergleich der empfangenen und hinterlegten Abstandssignale festgestellten Abweichung zu groß ist, wird in einem dem Verfahrensschritt 140 folgenden Verfahrensschritt 150 eine nasse oder feuchte Fahrbahn erkannt. Falls die Abweichung nicht groß genug ist, wird das Verfahren von neuem gestartet oder alternativ beendet.

In einem zweiten Ausführungsbeispiel gemäß Figur 2a werden die zuvor im ersten Ausführungsbeispiel dargestellten Verfahrensschritte durchgeführt. In diesem zweiten Ausführungsbeispiel werden in dem Verfahrensschritt 140 die Abstandssignalamplituden und/oder Abstandssignalbreiten der empfangenen ersten Abstandssignale mit hinterlegten Abstandssignalamplituden und/oder Abstandssignalbreiten der zweiten empfangenen Abstandssignalen verglichen, falls in den vorherigen Verfahrensschritten 120 und 130 festgestellt wurde, dass die empfangenen ersten Abstandssignalen dem vordefinierten Abstand kleiner dem bestimmten Abstandsschwellwert AS entsprechen.

In einem dritten Ausführungsbeispiel werden die im ersten und zweiten Ausführungsbeispiel dargestellten Verfahrensschritte durchgeführt. Zusätzlich wird hierbei im Verfahrensschritt 90, welcher sich vor Verfahrensschritt 100 befindet, die Abstrahlrichtung einer ersten Erfassungseinheit zum Empfangen von ersten Abstandssignale aus einem vordefinierten Abstand kleiner dem bestimmten Abstandsschwellwert und zum Empfangen von Abstandssignalen größer gleich dem bestimmten Abstandsschwellwert eingestellt. Das Einstellen der Abstrahlrichtung der ersten Erfassungseinheit erfolgt beispielsweise durch Einstellen der Schallfrequenz der ersten Erfassungseinheit oder durch Einstellen des Schalltrichters der ersten Erfassungseinheit.

In einem vierten Ausführungsbeispiel werden die zuvor im ersten, zweiten und dritten Ausführungsbeispiel dargestellten Verfahrensschritte durchgeführt. In diesem Ausführungsbeispiel repräsentieren die empfangenen ersten Abstandssignale einen Abstand des wenigstens einen detektierten Objekts oder der Fahrbahn zu der ersten Erfassungseinheit. Außerdem repräsentieren die empfangenen ersten Abstandssignale in diesem vierten Ausführungsbeispiel Ultraschallsignale. In diesem Ausführungsbeispiel wird in einem zusätzlichen Verfahrensschritt 110, welcher auf den Verfahrensschritt 100 folgt, geprüft, ob ein Messzyklus der ersten Erfassungseinheit mit tatsächlichen Ultraschallsignalen vorliegt. Hierzu wird beispielsweise die Anzahl empfangener Ultraschallsignale in dem Messzyklus geprüft, wobei die empfangenen Ultraschallsignale demselben Objektabstand oder Fahrbahnabstand entsprechen. So kann beispielsweise ein Messzyklus der ersten Erfassungseinheit mit tatsächlichen Ultraschallsignalen nur dann vorliegen, wenn höchstens 6 Ultraschallsignale in einem Messzyklus der ersten Erfassungseinheit empfangen werden. Eine andere Methode ist, dass die Anzahl von nacheinander folgenden Messzyklen, bei denen Ultraschallsignale empfangen werden, die demselben Objektabstand oder Fahrbahnabstand entsprechen, geprüft wird. Es können aber auch nach einer weiteren Methode beispielsweise die Abstandssignalbreiten der empfangenen Ultraschallsignale innerhalb des Messzyklus geprüft werden. Wird durch eine oder mehrerer dieser Methoden festgestellt, dass ein Messzyklus mit tatsächlichen Ultraschallsignalen vorliegt, so wird das Verfahren mit Verfahrensschritt 120 fortgesetzt und die empfangenen tatsächlichen Ultraschallsignale innerhalb des Messzyklus weiter verwendet. Wird festgestellt, dass ein Messzyklus mit falschen Ultraschallsignalen, beispielsweise Störsignale, vorliegen, wird das Verfahren von neuem gestartet oder alternativ beendet.

In einem fünften Ausführungsbeispiel gemäß Figur 2a werden zusätzlich zu den in den vorherigen Ausführungsbeispielen dargestellten Verfahrensschritten in einem auf den Verfahrensschritt 130 folgenden Verfahrensschritt 135 die Fahrbahn charakterisierenden Eigenschaften, wie beispielsweise Fahrbahnunebenheiten empfangen. In dem darauf folgenden Verfahrensschritt 140 werden die empfangenen ersten Abstandssignale daraufhin mit hinterlegten, der trockenen Fahrbahn mit den charakterisierenden Eigenschaften entsprechenden zweiten Abstandssignalen verglichen.

In einem sechsten Ausführungsbeispiel gemäß Figur 2b werden im Unterschied zu den vorherigen Ausführungsbeispielen gemäß Figur 2a in einem auf den Verfahrensschritt 140 folgenden Verfahrensschritt 160 die festgestellte Abweichung mit einem ersten Schwellenwert SW1 verglichen. Wird dabei festgestellt, dass die festgestellte Abweichung kleiner gleich dem ersten Schwellenwert SW1 ist, wird das Verfahren von neuem gestartet oder alternativ beendet. Wird jedoch festgestellt, dass die festgestellte Abweichung den ersten Schwellenwert SW1 überschreitet, so wird mit Verfahrensschritt 170 fortgefahren. In Verfahrensschritt 170 wird die festgestellte Abweichung mit einem zweiten Schwellenwert SW2 verglichen, welcher größer als der erste Schwellenwert SW1 ist. Wird bei dem Vergleich festgestellt, dass die festgestellte Abweichung kleiner gleich dem zweiten Schwellenwert SW2 ist, so wird in dem darauf folgenden Verfahrensschritt 190 eine feuchte Fahrbahn erkannt. Wird bei dem Vergleich jedoch festgestellt, dass die festgestellte Abweichung den zweiten Schwellenwert SW2 überschreitet, so wird in Verfahrensschritt 180 eine nasse Fahrbahn erkannt. Daraufhin wird das Verfahren beendet.

In einem siebten Ausführungsbeispiel werden die im sechsten Ausführungsbeispiel dargestellten Verfahrensschritte durchgeführt. Hierbei erfolgt zusätzlich sowohl auf die Erkennung einer nassen Fahrbahn in Verfahrensschritt 180, wie auch auf die Erkennung einer feuchten Fahrbahn in Verfahrensschritt 190, in Verfahrensschritt 200 die Prüfung der Zunahme der bei dem Vergleich der empfangenen und hinterlegten Abstandssignalen festgestellten Abweichung über der Zeit. Wird hierbei keine Zunahme über der Zeit festgestellt, so wird das Verfahren von neuem gestartet oder alternativ beendet. Wird hierbei jedoch eine Zunahme festgestellt, so wird in Verfahrensschritt 210 ein Nässezustand der Fahrbahn erkannt, welcher beispielsweise auf Regen oder steigende Luftfeuchtigkeit zurückzuführen ist. Das Verfahren wird hieraufhin beendet.

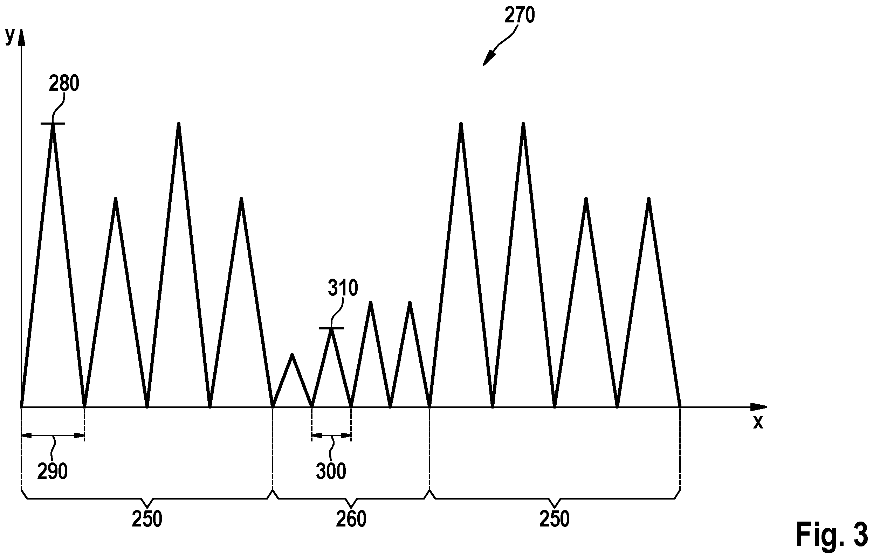

Das dargestellte Diagramm 270 in Figur 3 zeigt exemplarisch einen Verlauf von empfangenen ersten Abstandssignalen Messzyklen bei trockener Fahrbahn 250 und einem Messzyklus bei nasser Fahrbahn 260. Wie hierbei zu erkennen ist, sind die Abstandssignalamplituden 280 und Abstandssignalbreiten 290 innerhalb des ersten Messzyklus bei trockener Fahrbahn 250 wesentlich größer als die Abstandssignalamplituden 310 und Abstandssignalbreiten 300 innerhalb des Messzyklus bei nasser Fahrbahn 260. Dies ist auf die höhere erzeugte Dämpfung der ersten Abstandssignale auf einer nassen Fahrbahn und die hierdurch geringere reflektierte Energie der Abstandssignale zurückzuführen.

Der in den obigen Ausführungsbeispielen beschriebenen Abstandsschwellwert beträgt insbesondere 50 cm. Dies ist ein Wert oberhalb dessen Ultraschallsensoren zur Totwinkelerkennung Objekte noch sicher erkennen können und unterhalb dessen Abstandswerte zur Erkennung einer nassen oder feuchten Fahrbahn verwendet werden können.

Das in den obigen Ausführungsbeispielen dargestellte Verfahren soll zur Erkennung einer nassen oder feuchten Fahrbahn und zur Detektion von Objekten für ein Fahrzeug dienen.

## Patentansprüche

1. Verfahren zur Erkennung (150) einer nassen (180) oder feuchten Fahrbahn (190) und zur Detektion (125) von Objekten, wobei das Verfahren die folgenden Verfahrensschritte umfasst:
- Empfangen (100) von ersten Abstandssignalen, und
- Detektion (125) wenigstens eines Objekts, falls die empfangenen ersten Abstandssignale einem Abstand größer gleich einem bestimmten Abstandsschwellwert (AS) entsprechen, und
- Vergleichen (140) der empfangenen ersten Abstandssignale mit hinterlegten zweiten Abstandssignalen, falls die empfangenen ersten Abstandssignale einem vordefinierten Abstand kleiner dem bestimmten Abstandsschwellwert (AS) entsprechen, und
- Erkennen (150) einer nassen (180) oder feuchten Fahrbahn (190) in Abhängigkeit einer durch den Vergleich der empfangenen und hinterlegten Abstandssignale festgestellten Abweichung.

2. Verfahren nach Anspruch 1, **dadurch gekennzeichnet, dass** das Verfahren die folgenden zusätzlichen Verfahrensschritte umfasst:
- Vergleichen (140) von Abstandssignalamplituden (280, 310) und/oder Abstandssignalbreiten (290, 300) der empfangenen ersten Abstandssignale mit hinterlegten Abstandssignalamplituden und/oder Abstandssignalbreiten der zweiten hinterlegten Abstandssignalen, falls die empfangenen ersten Abstandssignalen dem vordefinierten Abstand kleiner dem bestimmten Abstandsschwellwert (AS) entsprechen.

3. Verfahren nach einem der Ansprüche 1 oder 2, **dadurch gekennzeichnet, dass** das Verfahren die folgenden zusätzlichen Verfahrensschritte umfasst:
- Erkennen (150) einer feuchten Fahrbahn (190) in Abhängigkeit einer Überschreitung eines ersten Schwellenwertes (SW1) durch die festgestellte Abweichung, oder
- Erkennen (150) einer nassen Fahrbahn (180) in Abhängigkeit einer Überschreitung eines zweiten Schwellenwertes (SW2) durch die festgestellte Abweichung, wobei der zweite Schwellenwert (SW2) größer ist als der erste Schwellenwert (SW1).

4. Verfahren nach einem der Ansprüche 1 bis 3, **dadurch gekennzeichnet, dass** der bestimmte Abstandsschwellwert (AS) 50 cm beträgt.

5. Verfahren nach einem der Ansprüche 1 bis 4, **dadurch gekennzeichnet, dass** das Verfahren zur Erkennung (150) einer nassen (180) oder feuchten (190) Fahrbahn für ein Fahrzeug dient.

6. Verfahren nach einem der Ansprüche 1 bis 5, **dadurch gekennzeichnet, dass** das Verfahren den folgenden zusätzlichen Verfahrensschritt umfasst:
- Erkennen (210) eines Nässezustands der Fahrbahn in Abhängigkeit einer Zunahme und/oder Abnahme der bei dem Vergleich der empfangenen und hinterlegten Abstandssignale festgestellten Abweichung über der Zeit.

7. Verfahren nach Anspruch 1 bis 6, **dadurch gekennzeichnet, dass** die empfangenen ersten Abstandssignale einen Abstand des wenigstens einen detektierten Objekts oder der Fahrbahn zu einer ersten Erfassungseinheit (20) repräsentieren.

8. Verfahren nach einem der Ansprüche 1 bis 7, **dadurch gekennzeichnet, dass** die hinterlegten zweiten Abstandssignale einer trockenen Fahrbahn, insbesondere einer trockenen Fahrbahn in dem vordefinierten Abstand entsprechen.

9. Verfahren nach Anspruch 1 bis 8, **dadurch gekennzeichnet, dass** die empfangenen ersten Abstandssignale Ultraschallsignale repräsentieren.

10. Verfahren nach einem der Ansprüche 7 bis 9, **dadurch gekennzeichnet, dass** das Verfahren die folgenden zusätzlichen Schritte umfasst:
- Ermitteln (110) eines Messzyklus der ersten Erfassungseinheit (20) mit tatsächlichen Ultraschallsignalen in Abhängigkeit von
- der Anzahl empfangener Ultraschallsignale in dem Messzyklus, wobei die empfangenen Ultraschallsignale demselben Objektabstand oder Fahrbahnabstand entsprechen, und/oder
- der Anzahl von nacheinander folgenden Messzyklen, bei denen Ultraschallsignale empfangen werden, die demselben Objektabstand oder Fahrbahnabstand entsprechen und/oder
- den Abstandssignalbreiten (290, 300) der empfangenen Ultraschallsignale innerhalb des Messzyklus, und
- Verwenden der empfangenen Ultraschallsignale innerhalb des Messzyklus zur Detektion (125) von Objekten und zum Erkennen (150) einer nassen (180) oder feuchten (190) Fahrbahn in Abhängigkeit eines ermittelten Messzyklus der ersten Erfassungseinheit (20) mit tatsächlichen Ultraschallsignalen.

11. Verfahren nach Anspruch 10, **dadurch gekennzeichnet, dass** das Verfahren die folgenden zusätzlichen Verfahrensschritte umfasst:
- Ermitteln (110) eines Messzyklus der ersten Erfassungseinheit (20) mit tatsächlichen Ultraschallsignalen in Abhängigkeit von höchstens 6 empfangenen Ultraschallsignalen in einem Messzyklus der ersten Erfassungseinheit (20).

12. Verfahren nach einem der Ansprüche 7 bis 11, **dadurch gekennzeichnet, dass** das Verfahren die folgenden zusätzlichen Verfahrensschritte umfasst:
- Einstellen (90) einer Abstrahlrichtung der ersten Erfassungseinheit (20) zum Empfangen (100) von ersten Abstandssignale aus einem vordefinierten Abstand kleiner dem bestimmten Abstandsschwellwert (AS) und zum Empfangen von Abstandssignalen größer gleich dem bestimmten Abstandsschwellwert (AS).

13. Verfahren nach Anspruch 12, **dadurch gekennzeichnet, dass** das Verfahren die folgenden zusätzlichen Schritte umfasst:
- Einstellen (90) der Abstrahlrichtung der ersten Erfassungseinheit (20) durch
- Einstellen der Schallfrequenz der ersten Erfassungseinheit (20), oder
- Einstellen eines Schalltrichters der ersten Erfassungseinheit (20).

14. Verfahren nach einem der Ansprüche 8 bis 13, **dadurch gekennzeichnet, dass** das Verfahren die folgenden zusätzlichen Schritte umfasst:
- Empfangen (135) von die Fahrbahn charakterisierenden Eigenschaften, insbesondere von Fahrbahnunebenheiten, und
- Vergleichen (140) der empfangenen ersten Abstandssignale mit hinterlegten zweiten Abstandssignalen, falls die empfangenen ersten Abstandssignale einem vordefinierten Abstand kleiner dem bestimmten Abstandsschwellwert (AS) einer Fahrbahn zu der ersten Erfassungseinheit (20) entsprechen, wobei die hinterlegten zweiten Abstandssignale Abstandssignalen von einer Fahrbahn mit den charakteristischen Eigenschaften entsprechen.

15. Recheneinheit (30) zur Erkennung (150) einer nassen (180) oder feuchten (190) Fahrbahn und zur Detektion (125) von Objekten zur Durchführung eines Verfahrens nach einem der Ansprüche 1 bis 14, **dadurch gekennzeichnet, dass** die Recheneinheit (30) dazu ausgebildet ist,
- erste Abstandssignale zu empfangen, und
- Objekte zu detektierten, falls die empfangenen ersten Abstandssignalen einem Abstand größer gleich einem bestimmten Abstandsschwellwert (AS) entsprechen, und
- die empfangenen ersten Abstandssignale mit hinterlegten zweiten Abstandssignalen zu vergleichen, falls die empfangenen ersten Abstandssignale einem vordefinierten Abstand kleiner dem bestimmten Abstandsschwellwert (AS) entsprechen, und
- eine nasse oder feuchte Fahrbahn in Abhängigkeit einer durch den Vergleich der empfangenen und hinterlegten Abstandssignale festgestellten Abweichung zu erkennen.

16. Recheneinheit (30) nach Anspruch 15, **dadurch gekennzeichnet, dass** die Recheneinheit (30) dazu ausgebildet ist,
- die Abstandssignalamplituden (280, 310) und/oder Abstandssignalbreiten (290, 300) der empfangenen ersten Abstandssignale mit hinterlegten Abstandssignalamplituden und/oder Abstandssignalbreiten der zweiten Abstandssignale zu vergleichen, falls die empfangenen ersten Abstandssignale dem vordefinierten Abstand kleiner dem bestimmten Abstandsschwellwert (AS) entsprechen.

17. Recheneinheit (30) nach einem der Ansprüche 15 oder 16, **dadurch gekennzeichnet, dass** die Recheneinheit (30) dazu ausgebildet ist,
- ein tatsächliches Ultraschallsignal in Abhängigkeit von
- der Anzahl empfangener Ultraschallsignale in einem Messzyklus der ersten Erfassungseinheit (20), wobei die empfangenen Ultraschallsignale demselben Objektabstand oder Fahrbahnabstand entsprechen, und/oder
- der Anzahl von nacheinander folgenden Messzyklen der ersten Erfassungseinheit (20), bei denen Ultraschallsignale empfangen werden, die demselben Objektabstand oder Fahrbahnabstand entsprechen und/oder
- den Abstandssignalbreiten (290, 300) der empfangenen Ultraschallsignale,
zu ermitteln, und
- die empfangenen Ultraschallsignale zur Detektion (125) von Objekten und zum Erkennen (150) einer nassen (180) oder feuchten (190) Fahrbahn in Abhängigkeit eines ermittelten tatsächlichen Ultraschallsignals zu verwenden.

18. Recheneinheit (30) nach einem der Ansprüche 15 bis 17, **dadurch gekennzeichnet, dass** die Recheneinheit (30) dazu ausgebildet ist,
- eine feuchte Fahrbahn in Abhängigkeit einer Überschreitung eines ersten Schwellenwertes (SW1) durch die festgestellte Abweichung zu erkennen, oder
- eine nasse Fahrbahn in Abhängigkeit einer Überschreitung eines zweiten Schwellenwertes (SW2) durch die festgestellte Abweichung, wobei der zweite Schwellenwert (SW2) größer ist als der erste Schwellenwert (SW1), zu erkennen.

19. System zur Erkennung (150) einer nassen (180) oder feuchten (190) Fahrbahn und zur Detektion (125) von Objekten, ausgebildet zur Durchführung eines Verfahrens nach einem der Ansprüche 1 bis 14, wenigstens umfassend
- eine Recheneinheit (30) nach einem der Ansprüche 15 bis 18,
- eine erste Erfassungseinheit (20) zur Erfassung von ersten Abstandswerten, und
- eine Ausgabeeinheit (40) zur Ausgabe einer Information über eine erkannte nasse oder feuchte Fahrbahn und einer Information über detektierte Objekte,
- eine Speichereinheit (25) zur Hinterlegung der zweiten Abstandssignale,
wobei die Recheneinheit (30) des Systems dazu ausgebildet ist,
- die erste Erfassungseinheit (20) zur Einstellung der Abstrahlrichtung zum Empfang von ersten Abstandssignale aus einem vordefinierten Abstand kleiner dem bestimmten Abstandsschwellwert (AS) und zum Empfang von Abstandssignalen größer gleich dem bestimmten Abstandsschwellwert (AS) der Abstrahlrichtung der ersten Erfassungseinheit (20) anzusteuern.

20. System nach Anspruch 19, zusätzlich umfassend
- wenigstens eine zweite Erfassungseinheit (10) zur Erfassung von die Fahrbahn charakterisierenden Eigenschaften,
wobei die Recheneinheit (30) des Systems dazu ausgebildet ist,
- die empfangenen ersten Abstandssignale mit hinterlegten zweiten Abstandssignalen zu vergleichen, falls die empfangenen ersten Abstandssignale einem vordefinierten Abstand kleiner dem bestimmten Abstandsschwellwert (AS) einer Fahrbahn zu der ersten Erfassungseinheit (20) entsprechen, wobei die hinterlegten zweiten Abstandssignale Abstandssignalen von einer Fahrbahn mit den charakteristischen Eigenschaften entsprechen.
